# EUROPEAN PATENT APPLICATION

(11) **EP 2 103 605 A1**
(43) Date of publication of application: **23.09.2009**
(21) Application number: 08005033.9
(22) Date of filing: 18.03.2008
(51) Int. Cl.: C07D 303/16, C08F 220/26, C09D 133/06

(54) **Composition for low colour of unsaturated glycidyl esters derivatives and the use thereof**

(71) Applicant: Hexion Specialty Chemicals Research Belgium S.A., 1348 Ottignies Louvain-la-Neuve (BE)
(72) Inventor: Heymans, Denis, 1348 Ottignies Louvain-la-Neuve (BE); Uytterhoeven, Griet, 1348 Ottignies Louvain-la-Neuve (BE)

(57) **Abstract**

The present invention relates to a composition comprising an aliphatic branched alcohol and glycidyl functional product esters, which are currently used in the synthesis of radical polymerisable acrylic or methacrylic acid derivatives, to be further reacted into resins for coating applications. Another aspect of the present invention, is formed by the cured coating films derived from the hereinbefore defined coating compositions and applied on a shaped substrate, and more in particular on automotives.

## Description

The present invention relates to a composition comprising an aliphatic branched alcohol and glycidyl functional product esters, which are currently used in the synthesis of radical polymerisable acrylic or methacrylic acid derivatives, to be further reacted into resins for coating applications.
The use of such glycidyl functional product esters to produce resins for coating applications offer improved weathering resistance over the resin free of these glycidyl esters, however the top coats have still a drawback which is the higher colour of the resin and the cured coating.

EP 0 901 481 and US 6,136,991 disclosed the purification of glycidyl esters of α branched alkane carboxylic acids by a thin film vacuum, short pass distillation apparatus. This purification technology was considered as the only suitable, because glycidyl esters are thermally and chemically reactive molecules and separation of by-products (non-glycidyl functional products) from the glycidyl esters is not easily accomplished. The purification of such a glycidyl ester was found to have a positive contribution to coating film properties and more specifically to the glass transition temperature (Tg) of the polymer(s) and/or oligomer(s) used as coating binders.
Therefore, after further research in order to reduce the colour of the resins based glycidyl functional product esters we have found that the presence of a secondary or a tertiary aliphatic alcohol reduces the colour during the synthesis of resins based on glycidyl esters and acrylic or methacrylic acid further polymerised with unsaturated monomers.

An object of the present invention is to provide a composition of glycidyl esters of α-branched alkane carboxylic acids reacted with (meth)acrylic acid providing attractive low colour at a low cost.

Another object of the present invention is therefore to provide a composition of glycidyl esters of α-branched alkane carboxylic acids, to be copolymerised into resins showing attractive coating film properties and a low colour of the initial monomer and the resulting resins.

As result of extensive research and experimentation, it has now surprisingly been found that such desired low colour property could be achieved with a combination of the glycidyl esters of α-branched alkane carboxylic acids and a secondary and/or a tertiary aliphatic alcohol (further called "alcohol") in 0.5 to 15 weight% on glycidyl ester.

The secondary aliphatic alcohol has a linear, cyclic or branched aliphatic carbon atoms chain, from 3 to 12 carbon atoms. The secondary alcohol can be, for example, selected out from 2-propanol, 2-butanol, 3-pentanol, 2-pentanol, 2-methyl 4-pentanol, 2-methyl 3-pentanol, 2,4-dimethyl 3-pentanol, 2-hexanol, 3-hexanol, 2-heptanol,3-heptanol, 4-heptanol, 2 methyl 3-heptanol, 2 methyl 4-heptanol, 2 methyl 5-heptanol, 2 methyl 6-heptanol, 2,6-dimethyl 3-heptanol, 2,6-dimethyl 4-heptanol, 2-octanol, 3-octanol, 4-octanol, 5-octanol, 2,7-dimethyl 4-octanol, and the like. The preferred are 2-methyl 4-pentanol, 2,6-dimethyl 4-heptanol, 2,4-dimethyl 3-pentanol and 2-methyl 3-pentanol and mixtures thereof. The most preferred are 2-methyl 4-pentanol, 2,6-dimethyl 4-heptanol and mixtures thereof.

The tertiary aliphatic alcohol has a linear, cyclic or branched aliphatic carbon atoms chain, from 4 to 12 carbon atoms. The tertiary alcohol can be, for example, selected out of 2-methyl 2-propanol, 2-methyl 2-butanol, 2,3-dimethyl 2-butanol, 2-ethyl 2-butanol, 3-ethyl 3-pentanol, 3-methyl 3-hexanol, 3 methyl 3-heptanol, and the like. The preferred are 2-methyl 2-propanol, 2-methyl 2-butanol, 2-ethyl 2-butanol, and mixtures thereof.
The most preferred are 2-methyl 4-pentanol, 2,6-dimethyl 4-heptanol and mixtures thereof.

The above lists are not limiting.

The secondary or tertiary alcohol is blended with the glycidyl ester in a range from 0.5 to 15 and preferably from 3 to 12 and most preferably from 5 to 10 weight% on glycidyl ester.

The conversion of the pre-treated (with above alcohol) glycidyl ester (adducted) with an unsaturated acid, leads to a low colour unsaturated monomer. In case of acrylic acid it is called ACE and in case of methacrylic acid it is called MACE. These monomers are used in radiation curable compositions or in the synthesis of curable resins.

In addition the present invention relates to resin compositions, obtainable by a process comprising the conversion of the pre-treated (with above alcohol) glycidyl ester adducted with an unsaturated acid, followed by radical polymerisation with other ethylenically unsaturated monomers.

The process consists of the following steps: the pre-treated glycidyl ester (and optionally a solvent) will be subsequently adducted with a copolymerisable acid such as acrylic or methacrylic acid to be incorporated by radical copolymerisation with other ethylenically unsaturated comonomers into a thermosetting resin. More in particular the pretreated glycidyl ester will be converted into adducts with acrylic acid, methacrylic acid or maleic acid, fumaric acid or anhydrides thereof, which are radically copolymerisable with acrylate or methacrylate and other vinyl comonomers. The resin is typically produced by heating the ethylenically unsaturated monomers in presence of radical initiator.

The same resin can be obtained by introduction of the alcohol into the comonomer mixture added into the reactor containing the glycidyl ester and optionally a solvent; with at least one of the comonomer has a carboxylic acid group able to react with the glycidyl ester.

The resin compositions are specially adapted for use as a top coat on metal substrate. The said resin is curable with a curing agent, which reacts with the hydroxyl functional groups.

Any starting alkyl glycidyl esters can be used for the purpose of this invention. Preferably starting alkyl glycidyl esters are used, which correspond to the general formula (I), 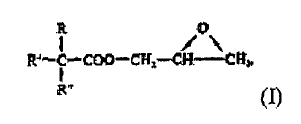 in which R,R',R" are independently hydrogen or aliphatic alkyl radicals of 1 to 10 carbon atoms, while the total number of carbon atoms of the three radicals (R+R'+R")being between 1 to 20, preferably between 2 to 13. These alkyl glycidyl esters are derived for example from 1-methylpropionic acid, 1-dimethyl-propionic acid (pivalic acid), iso-butyric acid, 1-methyl-propionic acid, 1-methyl-butyric acid, 1-dimethyl-butyric acid, VERSATIC acid, neodecanoic glycidyl ester and other glycidyl ester of alkanoic acids and mixture thereof and the like. The most preferred glycidyl esters are glycidyl esters containing in the acid moiety from 9 to 13 carbon atoms and most preferred is CARDURA E10P glycidyl ester, which is derived from VERSATIC 10 carboxylic acid (CARDURA & VERSATIC are trademarks from Hexion Specialty Chemicals Inc).

The radical copolymerisation reaction of adducts of glycidyl esters and other ethylenically unsaturated comonomers is carried out at a temperature between 130°C and 210°C, preferably from 135°C to 190°C and more preferably from 140°C to 180°C.
Suitable polymerization initiators to be used for free radical copolymerization include any of the conventional free radical forming compounds, individually or in a mixture. Examples of such compounds are aliphatic azo compounds, diacyl peroxides, peroxy-dicarbonates, alkyl per-esters, alkyl hydroperoxides, per ketals, dialkyl peroxides or ketone peroxides.
Dialkyl peroxides, such as di-tert-butyl peroxide, di-tert-amyl peroxide, and alkyl per esters such as tert-butyl peroxy-2-ethylhexanoate or tert-amyl peroxy-2-ethylhexanoate are preferred.
The concentration of initiator is used in.the range of from 1 to 8 wt% and preferably of from 1.5 to 5 wt%, based on the total mass of the co-monomers.
The ethylenically unsaturated co-monomer may be chosen from aromatic vinyl monomers, preferably styrene also, including substituted styrene such as alpha-substituted vinyl aromatic compounds including vinyl toluene, alpha-methylstyrene and the like. Beta substituted styrene compounds can also be used, such as stylbene, beta-methylstylbene, and the like. Another class of suitable vinyl monomers are alpha-olefins with a carbon chain length of more than 10 and preferably those with 10 to 25 carbon atoms.

Vinyl ethers which contain alkyl, aryl or cycloaliphatic groups with a carbon chain length 5 to 15 and preferably from 5 to 10, can be also used as comonomers.
Vinyl esters such as vinyl acetate, benzoate and Versatate (e.g. VEOVA 10 or VEOVA 9 vinyl esters (VEOVA is a trademark ex Hexion) and the like are suitable co-monomers to be used in the process of this invention.
Alkyl acrylate and/or an alkyl methacrylate, contains an alkyl group having from 1 to 12 carbon atoms, and preferably from 1 to 10 carbon atoms. Particularly suitable monomers of the group are selected from methyl-, ethyl-, propyl-, isopropyl, n-butyl, iso-butyl, isobornyl esters of acrylic acid or methacrylic acid.
More preferred are methyl acrylate or methyl methacrylate, ethyl acrylate, ethyl methacrylate, n-butyl acrylate or n-butyl methacrylate.

Other alkyl unsaturated monomers, such as symmetric or assymetric unsaturated diesters, diacid or anhydride e.g. alkyl maleate, alkyl fumarate, maleic acid or anhydride and fumaric acid and the like could be part of the co-monomer mixture.

Suitable cross-linking agents to be applied in the coating compositions of the present invention can be selected in general from blocked isocyanate groups containing compounds. Polyisocyanate may be aliphatic, cycloaliphatic, or heterocyclic and may be substituted or unsubstituted. For curing above 100°C the polyisocyanate is preferably a fully-capped (blocked) polyisocyanate with substantially no free isocyanate groups. The polyisocyanate is preferably aliphatic. Diisocyanates are preferred, although higher polyisocyanates can be used in place of or in combination with diisocyanates. Suitable isocyanates for curing at room temperature are described in "Polyurethanes for coating" (Ed. By Dr. Ulrich Zorll, author Dr. Manfred Bock; pages 109 to 150) which is included herein by reference. Other types of hereinbefore specified cross-linking agents can be formaldehyde adducts derived from urea, melamine and benzoguanamine, or the etherified formaldehyde-amine adducts. Preferred cross-linking agents for the formaldehyde adducts are the melamine-formaldehyde adducts partially or completely etherified with aliphatic alcohols having 1 to 4 carbon atoms. Examples of such commercially available curing agents are: MAPRENAL MF900, VMF3296 and CYMEL 303, 327 and 1158 curing agents (MAPRENAL, VMF and CYMEL are trademarks). The cross-linking reaction can be catalyzed by addition of an organometallic compound, such as tin compounds, and if desired tertiary amines, preferably diethyl ethanol amine. Examples of appropriate tin compounds are di-butyl tin di-laurate, di-butyl tin acetate and di-butyl oxo-tin.

It will be appreciated that another aspect of the present invention is formed by the hydroxyl containing resin composition to be used in coating compositions, which provide a fast drying time of the said coating, while maintaining other relevant physical properties such as hardness, MEK resistance, VOC flexibility, scratch resistant and acid resistant coating films after curing.

Another aspect of the present invention is formed by the curable coating films derived from the herein before defined coating compositions and applied on a shaped substrate, and more in particular on automotives.

### Test description and analytical methods :

Acid value: according to ISO 3682-96
Epoxy group content: according to ASTM D1652
Colour (Pt/Co) according to ASTM D1209

Molecular weight determination:
*General:* General information on liquid exclusion chromatography can be obtained from ASTM D3016; standard practice for use of liquid exclusion chromatography terms and relationships.
Scope: This method describes the determination of the molecular size distribution characteristics of acrylic copolymer resins.

for the correlation, the following standards are used: polystyrene standards, covering the relative molecular mass range from about 5000 to 3000000 the following Toya Soda standards are recommended: A-5000, P-1, F-2, F-4, F-10, F-20, F-40, F-80, F128, F-288 and 1-phenylhexane.

### Method conditions:

- PL (Polymer Laboratories) columns were used.
- Short column set : small pro-column and 3 columns of 30 cm PL-gel 5 micron: mixed C + 2X mixed D
- Column oven at 40°C
- Mobile phase: THF at 0.8ml/min
- UV- and RI detector

Samples were dissolved in THF. Mn, Mw, Peak and Mwd are quoted.

Solids content: according to ASTM D2369-92

Volatile organic content (VOC): according to ASTM D 3960-96 The invention is illustrated in more detail in the following examples, however without restricting its scope to these specific embodiments.

### EXAMPLES

### Example 1 synthesis of ACE

Equipment: Glass reactor equipped with an anchor stirrer, reflux condenser and nitrogen flush.

| | **Amount in grams** |
|---|---|
| Cardura E10 P | 300 |
| Acrylic acid | 88.96 |
| Tetra ethyl ammonium bromide (TEABr) | 2.43 |
| 4-methoxyphenol MEHQ | 0.080. |
| DIBC | 11.74 |
| **Action** | **Time** |
| Charge Cardura E10 P in reactor, start stirrer and heat up to 85°C | |
| At 85°C add TEABr (catalyst) to the reactor | |
| At 85°C add MEHQ (inhibitor) to the reactor | |
| Dosing of acrylic acid in such a rate that the temperature will not rise above 89° | 1 hour |
| Post reaction at 95°C (not higher than 92°C) | 7h 30 min |

| | |
|---|---|
| DIBC : 2,4-dimethyl 3-pentanol | |

### Comparative example 2 ACE with no alcohol

Same conditions and quantity as example 1 except no DIBC is added.

**Properties of the ACE adducts**

| Example | EGC, meq/kg | Acid value meq/kg | Colour, (Pt/Co) |
|---|---|---|---|
| 1 | 425 | 2.5 | 36 |
| 2 (comparative) | 374 | 7.2 | 41 |

**Synthesis of resins** comprising ACE or MACE, general set-up: the reactor was charged with of Cardura E10P, solvent and the monomer feed is added over period of nearly 5 hours at 165°C (or 160°C), the post cooking (1 hour) at 165°C (or 160°C).

### Examples 3-5 based on ACE:

### Example 3

Reaction temperature 165°C

| IRC | | % weight | Intake |
|---|---|---|---|
| | Cardura | 30 | 150 |
| | Shellsol A | 11 | 55 |
| | | | |
| Monomer feed (5 hours) | | | |
| | extra AA | 1.77 | 8.85 |
| | AA | 8.9 | 44.50 |
| | HEMA | 16.0 | 80.0 |
| | Styrene | 22.0 | 110.00 |
| | isoBornyl MA | 21.3 | 106.50 |
| | DIBC | 1 | 5 |
| | DTBP * | 1 | 5 |
| | | | |
| Post cook (1 hour) | DTBP | 0.5 | 2.5 |
| Butyl acetate | | 8 | 40 |

| | | | |
|---|---|---|---|
| * DTBP= Trigonox B, Akzo Nobel | | | |

### Example 4

same intake and conditions as example 3 but with 15 grams DIBC

### Example 5

same as example 4 but DIBC is replaced by MIBC (2-methyl 4-pentanol)

### Examples 6 based on MACE

**Reaction temperature 160°C**

| IRC | | % weight | Intake |
|---|---|---|---|
| | Cardura | 30 | 540 |
| | xylene | 2.5 | 45 |
| | | | |
| Monomer feed (5 hours) | | | |
| | xylene | 8.5 | 153 |
| | MAA | 10 . 7 | 209 |
| | HEMA | 16.0 | 288 |
| | Styrene | 22.0 | 396 |
| | MMA | 21.3 | 383.4 |
| | DIBC | 3 | 54 |
| | DTBP * | 3.6 | 64.8 |
| | | | |
| Post cook (1 hour) | DTBP | 1 | 18 |
| Butyl acetate | | 8 | 144 |

| | | | |
|---|---|---|---|
| * DTBP= Trigonox B, Akzo Nobel | | | |

### Comparative examples 7 and 8 with no alcohol present

### Comparative example 7 as example 3 but without DIBC

**Reaction temperature 165°C**

| IRC | | % weight | Intake |
|---|---|---|---|
| | Cardura | 30 | 150 |
| | Shellsol A | 11 | 55 |
| | | | |
| Monomer feed (5 hours) | | | |
| | extra AA | 1.77 | 8.85 |
| | AA | 8.9 | 44.50 |
| | HEMA | 16.0 | 80.0 |
| | Styrene | 22.0 | 110.00 |
| | isoBornylMA | 21.3 | 106.50 |
| | DIBC | 0 | 0 |
| | DTBP * | 1 | 5 |
| | | | |
| Post cook (1 hour) | DTBP | 0.5 | 2.5 |
| Butyl acetate | | 8 | 40 |

| | | | |
|---|---|---|---|
| * DTBP = Trigonox B, Akzo Nobel | | | |

### Comparative example 8 same as example 6 without DIBC

**Reaction temperature 160°C**

| IRC | | % weight | Intake |
|---|---|---|---|
| | Cardura | 30 | 540 |
| | xylene | 2.5 | 45 |
| | | | |
| Monomer feed (5 hours) | | | |
| | xylene | 8.5 | 153 |
| | MAA | 10.7 | 209 |
| | HEMA | 16.0 | 288 |
| | Styrene | 22.0 | 396 |
| | MMA | 21.3 | 383.4 |
| | DIBC | 0 | 0 |
| | DTBP * | 3.6 | 64.8 |
| | | | |
| Post cook (1 hour) | DTBP | 1 | 18 |
| Butyl acetate | | 8 | 144 |

| | | | |
|---|---|---|---|
| * DTBP= Trigonox B, Akzo Nobel | | | |

**Table 1: Properties of the resins**

| Example | Mw | Mn | Colour |
|---|---|---|---|
| 3 | - | - | 22.1 |
| 4 | 3756 | 2185 | 19.7 |
| 5 | 4170 | 2339 | 24.1 |
| 6 | 2360 | 1407 | 28.9 |
| 7(comparative) | 4088 | 2262 | 27.6 |
| 8(comparative) | 2565 | 1496 | 42.3 |

**Table 2: Colour stability on storage ***

| **Examples 9 and 10** have the same chemical composition as examples 8 and 6 respectively. | | |
|---|---|---|
| Weeks | Example 9, colour comparative | Example 10, colour |
| 0 | 36.9 | 23.9 |
| 2 | 51.9 | 39.3 |
| 4 | 49.7 | 40.4 |
| 6 | 47.8 | 40.7 |

| | | |
|---|---|---|
| * conditions: 60g of resin at 60% solids is put in a closed flask, For each measurement 1 flask is prepared. All recipients are place in an oven at 50°C. Colour of the resins is measured at appropriate times. | | |

The above examples illustrate clearly that the presence of a secondary alcohol reduces the colour of the initial product and also improve the stability of the colour upon storage.

## Claims

1. A composition of glycidyl esters of α-branched alkane carboxylic acids reacted with (meth)acrylic acid in presence of a secondary and/or a tertiary aliphatic alcohol providing attractive low colour, and optionally a vinyl unsaturated monomer.

2. The composition of claim 1 **characterized in that** the secondary and/or a tertiary aliphatic alcohol is present in 0.5 to 15 weight% on glycidyl ester.

3. The composition of claim 1 **characterize in that** the secondary and/or a tertiary aliphatic alcohol is in a range preferably from 1 to 12 and most preferably from 5 to 10 weight% on glycidyl ester.

4. The composition of claims 1-3 in which the secondary aliphatic alcohol has a linear, cyclic or branched aliphatic carbon atoms chain, from 3 to 12 carbon atoms.

5. The composition of claims 1-3 in which the tertiary aliphatic alcohol has a linear, cyclic or branched aliphatic carbon atoms chain, from 4 to 12 carbon atoms.

6. The composition of claims 1-3 in which the secondary alcohol is selected out from 2-propanol, 2-butanol, 3-pentanol, 2-pentanol, 2-methyl 4-pentanol, 2-methyl 3-pentanol, 2,4-dimethyl 3-pentanol, 2-hexanol, 3-hexanol,2-heptanol,3-heptanol, 4-heptanol, 2 methyl 3-heptanol, 2 methyl 4-heptanol, 2 methyl 5-heptanol, 2 methyl 6-heptanol, 2,6-dimethyl 3-heptanol, 2,6-dimethyl 4-heptanol, 2-octanol, 3-octanol, 4-octanol, 5-octanol, 2,7-dimethyl 4-octanol, and the like. The preferred are 2-methyl 4-pentanol, 2,6-dimethyl 4-heptanol, 2,4-dimethyl 3-pentanol and 2-methyl 3-pentanol, mixtures thereof and/or the tertiary alcohol can be, for example, selected out from 2-methyl 2-propanol, 2-methyl 2-butanol, 2,3-dimethyl 2-butanol, 2-ethyl 2-butanol, 3-ethyl 3-pentanol, 3-ethyl 3-hexanol, 3 methyl 3-heptanol, and the like. The preferred are 2-methyl 2-propanol, 2-methyl 2-butanol, 2-ethyl 2-butanol, mixtures thereof.

7. The composition according to claim 1 **characterized in that** the glycidyl ester comprises an alkyl glycidyl ester corresponding to the general formula (I), 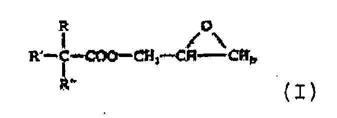 in which R,R',R" are independently hydrogen or aliphatic alkyl radicals of 1 to 10 carbon atoms, the total carbon atoms of the three radicals (R+R'+R") being between 1 to 20, preferably between 2 to 13.

8. The composition of claim 7 **characterized in that** the glycidyl ester is selected from 1-methylpropionic glycidyl ester, 1-dimethyl-propionic glycidyl ester (pivalic glycidyl cster), iso-butyric glycidyl ester, 1-methyl-butyric glycidyl ester, 1-dimethyl-butyric glycidyl ester, neodecanoic glycidyl ester and other glycidyl ester of alkanoic acids and mixture thereof.

9. The resins composition comprising the obtainable reaction of the glycidyl functional group into an adduct with an ethylenically unsaturated acid monomer of claim 1 and subsequent radical copolymerisation of this adduct with other ethylenically unsaturated comonomers.

10. A curable coating composition comprising the resin composition of claim 9 wherein the said copolymer is crosslinked with a curing agent for hydroxyl functionality, applied on a shaped substrate.
